# EUROPÄISCHE PATENTANMELDUNG

(11) **EP 2 388 851 A1**
(43) Veröffentlichungstag der Anmeldung: **23.11.2011**
(21) Anmeldenummer: 11166478.5
(22) Anmeldetag: 18.05.2011
(51) Int. Cl.: H01M 10/50, F28F 3/08

(54) **Kühlvorrichtung und Verfahren zum Herstellen einer Kühlvorrichtung**

(30) Priorität: 18.05.2010 DE 102010029085
(71) Anmelder: Behr GmbH & Co. KG, 70469 Stuttgart (DE)
(72) Erfinder: Moser, Michael, 73492 Rainau (DE); Wiebelt, Achim, 71711 Steinheim (DE); Ludwig, Lars, 73733 Esslinger (DE); Herrmann, Hans-Georg, 70619 Stuttgart (DE)
(74) Vertreter: Grauel, Andreas

(57) **Zusammenfassung**

Die vorliegende Erfindung betrifft eine Kühlvorrichtung zur Kühlung elektrischer Komponenten. Die Kühlvorrichtung weist eine Mehrzahl von Kühlkörpern (102) auf, die jeweils mindestens einen Fluidkanal (106) aufweisen und benachbart zueinander angeordnet sind, wobei zumindest zwei benachbart angeordnete Kühlkörper (102) an gegenüberliegenden Randbereichen jeweils eine Formschlussstruktur aufweisen und über die Formschlussstrukturen mittels einer Formschlussverbindung und/oder einer Stoffschlussverbindung miteinander verbunden sind. Auch kann zwischen mindestens zwei benachbart angeordneten Kühlkörpern (102) ein Verbindungselement angeordnet sein, um die benachbart angeordneten Kühlkörper (102) mittels einer Formschlussverbindung, einer Stoffschlussverbindung und/oder einer Kraftschlussverbindung zu verbinden.

## Beschreibung

Die vorliegende Erfindung bezieht sich auf eine Kühlvorrichtung und auf ein Verfahren zum Herstellen einer Kühlvorrichtung, die zur Kühlung elektrischer Komponenten, beispielsweise einer Fahrzeugbatterie, eingesetzt werden kann.

Die DE 10 2008 027 293 A1 betrifft eine Vorrichtung zur Kühlung einer Fahrzeugbatterie mit einem Kühlkörper mit Kanälen zur Durchströmung mit einem Fluid. Der die Kanäle umfassende Kühlkörper kann als zumindest ein Strangpressprofil ausgebildet sein. Gemäß einer Ausführungsform können mehrere separate Strangpressprofile an den gleichen Sammler aufgenommen sein.

Es ist die Aufgabe der vorliegenden Erfindung eine verbesserte Kühlvorrichtung und ein verbessertes Verfahren zum Herstellen einer Kühlvorrichtung zu schaffen.

Diese Aufgabe wird durch eine Kühlvorrichtung gemäß Anspruch 1 sowie ein Verfahren zum Herstellen Kühlvorrichtung gemäß Anspruch 11 gelöst

Kern der Erfindung ist ein Einsatz eines skalierbaren Kühlersystems. Ein skalierbarer Kühler kann ausgebildet sein, um über ein geeignetes Fluid elektrische Komponenten zu kühlen. Dabei können Fluidleitungen zum Leiten des Fluids, speziell Extrusionsprofile, Fluidrohre oder Rohre aus Metall oder Kunststoff, über eine Formschlussverbindung zwischeneinander sowie durch eine Kontur von Sammlern des Kühlers gefügt sein. Hierbei kann durch eine Anzahl der Fluidleitungen sowie durch eine Länge der Fluidleitungen eine gewünschte Dimensionierung gewählt werden. Die Fluidleitungen selbst verfügen über einen Formschluss, welcher es ermöglicht mehrere Fluidleitungen miteinander zu verbinden. Zusätzlich können weitere Profile mit Funktionen, wie z.B. Befestigung, Strukturaurgaben oder Aufnahme weiterer Bauteile, mit den Fluidleitungen kombiniert werden. Somit besteht eine Ausführungsform der Erfindung in einem Strangpressprofilkühler mit Formschluss.

Durch die erfindungsgemäße Kühlvorrichtung können komplexe Kühler und deren aufwendige Herstellungsverfahren vermieden werden. Insbesondere kann eine kostenintensive Herstellung von Kühlereinzelteilen und des Kühlers selbst, die mit hohen spezifischen Investitionskosten verbunden ist, durch eine kostengünstigere Vorgehensweise ersetzt werden.

Vorteilhafterweise ergibt sich neben einer Köstenreduzierung durch den Einsatz günstiger Verfahren ein Gewichtsvorteil durch einen geringen Materialeinsatz sowie eine Reduzierung passiver, thermischer Masse. Ferner sind ein flexibler Aufbau des Kühlerblocks und eine Integration verschiedener Funktionen innerhalb eines Systems möglich.

Die vorliegende Erfindung schafft eine Kühlvorrichtung zur Kühlung elektrischer Komponenten, mit folgenden Merkmalen: einer Mehrzahl von Kühlkörpern, die jeweils mindestens einen Fluidkanal aufweisen und benachbart zueinander angeordnet sind, wobei zumindest zwei benachbart angeordnete Kühlkörper an gegenüberliegenden Randbereichen jeweils eine Formschlussstruktur aufweisen und über die Formschiussstrukturen mittels einer Formschlussverbindung und/oder einer Stoffschlussverbindung miteinander verbunden sind oder wobei zwischen mindestens zwei benachbart angeordneten Kühlkörpern ein Verbindungselement angeordnet ist, um die benachbart angeordneten Kühlkörper mittels einer Formschlussverbindung, einer Stoffschlussverbindung und/oder einer Kraftschlussverbindung zu verbinden.

Bei den elektrischen Komponenten kann es sich um eine oder mehrere Batterien oder Akkumulatoren handeln. Beispielsweise kann es sich um in einem Fahrzeug, insbesondere in einem Elektro- oder Hybridfahrzeug, angeordnete Batterien handeln. Die elektrischen Komponenten können im thermischen Kontakt mit der Kühlvorrichtung stehen. Insbesondere können die elektrischen Komponenten auf einer Oberfläche der Mehrzahl von Kühlkörpern angeordnet sein, so dass ein Wärmeaustausch zwischen den elektrischen Komponenten und einem in den Fluidkanälen fließenden Fluid möglich ist. Alternativ kann die Kühlvorrichtung auch zur Kühlung beliebiger anderer Komponenten eingesetzt werden. Ferner kann die Kühlvorrichtung auch als Temperiervorrichtung oder Heizvorrichtung eingesetzt werden, wenn die Fluidkanäle mit einem entsprechend temperierten Fluid durchflossen werden. Bei dem Fluid kann es sich um ein warmeübertragendes Fluid, insbesondere um ein Kühlmittel eines Kühlkreislaufs handeln. Alternativ oder ergänzend kann das Fluid auch ein Kältemittel eines Kältekreises sein, wobei die Kühlvorrichtung als Verdampfer für das Kältemittel ausgebildet sein kann. Das Fluid kann die Fluidkanäle der Mehrzahl von Kühlkörpern parallel durchströmen. Die Fluidkanale können als Rohre ausgeführt sein. Beispielsweise können die Fluidkanäle einen runden, eckigen oder trapezförmigen Querschnitt aufweisen. Jeder der Kühlkörper kann einen oder mehrere Fluidkanäle aufweisen. Im Falle mehrerer Fluidkanäle können diese parallel zueinander in einer Ebene angeordnet sein. Die Kühlkörper können aus einem gut wärmeleitenden Material, beispielsweise Metall, ausgeformt sein. Beispielsweise können die Kühlkörper als Extrusionsprofile ausgebildet sein. Bei den Randbereichen kann es sich um Seitenflächen der Kühlkörper handeln, die sich parallel zu einer Haupterstreckungsrichtung des oder der Fluidkanäle erstrecken. Die gegenüberliegenden Formschlussstrukturen eines Kühlkörpers können identisch, beispielsweise als Nut, ausgeformt sein. Alternativ können gegenüberliegende Formschlussstrukturen eines Kühlkörpers gegengleich ausgeformt sein, beispielsweise als Nut und Feder. Mittels der Formschlussstrukturen können benachbarte Kühlkörper direkt oder unter Verwendung eines Zwischenstücks zusammengefügt werden, so dass eine formschlüssige Verbindung ausgebildet wird. Das Zusammenfügen kann als eine Spundung ausgeführt werden. Die Formschlussverbindung kann unlösbar oder lösbar ausgeführt sein. Eine Ausdehnung der Kühlvorrichtung quer zu der Haupterstreckungsrichtung der Fluidkanäle kann durch die Anzahl der eingesetzten Kühlköper eingestellt werden.

Gemäß einer Ausführungsform können die zumindest zwei benachbart angeordneten Kühlkörper an gegenüberliegenden Randbereichen jeweils die Formschlussstruktur aufweisen und das Verbindungselement kann auf einander gegenüberliegenden Seitenflächen eine erste und eine zweite Verbindungsstruktur, jeweils zum Herstellen einer Formschlussverbindung zu einer der Formschlussstrukturen aufweisen. Dabei kann das mindestens eine Verbindungselement so zwischen zwei benachbarten Kühlkörpern angeordnet sein, dass das Verbindungselement über die Verbindungsstrukturen und die Formschlussstrukturen der zwei benachbarten Kühlkörper mit den zwei benachbarten Kühlkörpern mittels Formschlussverbindungen verbunden ist. Die Verbindungsstruktur des Verbindungselements und die Formschlussstruktur des an das Verbindungselement angrenzenden Kühlkörpers können einander entsprechen. Beispielsweise können die Verbindungsstruktur als ein Vorsprung und die Formschlussstruktur- als eine Vertiefung ausgeformt sein, in die der Vorsprung eingeführt werden kann. Entsprechend können die Verbindungsstrukturals eine Vertiefung und die Formschlüssstruktur als ein Vorsprung ausgeformt sein. Beispielsweise können die Verbindungsstruktur und die Formschlussstruktur als Nut und Feder ausgeführt sein. Durch ein Zusammenführen oder Zusammenstecken von Verbindungselement und Kühlkörper können dieselben, zumindest in Bezug auf eine erforderliche Kraftübertragung wesentliche Berührungsflachen, formschlüssig miteinander verbunden werden.

Gemäß einer Ausführungsform- können benachbarte Kühlkörper jeweils durch ein Verbindungselement verbunden sein Die Verbindungselemente ermöglichen dabei eine einfach zu realisierende und stabile Verbindung zwischen den Kühlkörpern

Dabei kann das mindestens eine Verbindungselement eine Mehrzahl von Rippen aufweisen. Die Rippen können als Montagerippen oder als Versteifungsrippen ausgebildet sein. Die Rippen können senkrecht zu einer Ebene stehen, in der die Kuhlkörper angeordnet sind. Dabei können sich die Rippen als benachbart angeordnete Stege aus einer Fläche des Verbindungselements erheben, die sich zwischen den gegenüberliegenden Seitenflächen des Verbindungselements erstreckt Durch die Rippen kann das Verbindungselement neben der Verbindungsfunktion eine weitere Funktion ausüben.

Auch kann das Verbindungselement einen Mittelbereich aufweist, der zwischen den zwei benachbart angeordneten Kühlkörpern angeordnet ist, und zwei einander gegenüberliegende und mit dem Mittelbereich verbundene Auflagebereiche aufweist, die jeweils auf einer Oberfläche eines der zwei benachbart angeordneten Kühlkörpern aufliegen, Beispielsweise kann das Verbindungselement als T-Profil ausgebildet sein.

Der Mittelbereich kann eine Aussparung zum Aufnehmen eines Verschlusselements aufweisen, das ausgebildet ist, um eine kraftschlüssige Verbindung zwischen dem Verbindungselement und den zwei benachbart angeordneten Kühlkörpern zu schaffen. Das Verschlusselement kann beispielsweise als eine Schraube oder Klammer ausgeführt sein, die in die Aussparung hineingeführt werden kann, um die kraftschlüssige Verbindung zu erzeugen.

Gemäß einer weiteren Ausführungsform kann die Kühlvorrichtung mindestens zwei Verbindungselemente aufweisen. Zwischen den zwei Verbindungselementen kann einer der Mehrzahl von Kühlkörpern angeordnet sein. Die zwei Verbindungselemente können jeweils ein Aufnahmeglied zum Aufnehmen jeweils eines Endabschnitts eines Zusatzelelements der Kühlvorrichtung aufweisen. Das Zusatzelement kann sich zwischen den mindestens zwei Verbindungselementen parallel zu dem einen der Kühlkörper erstrecken wenn das Zusatzelement montiert ist. Weist die Kühlvorrichtung mehr als zwei Verbindungselemente auf, so können alle oder nur ein Teil der Verbindungselemente ein entsprechendes Aufnahmeglied aufweisen. Zwischen zwei benachbart angeordneten Verbindungselementen kann jeweils ein entsprechendes Zusatzelement montiert werden. Das Aufnahmeglied kann als Führungsnut ausgeführt sein, die auf einer oder beiden Seitenflächen des Verbindungselements angeordnet ist. Dabei kann das Aufnahmeglied so weit von der Verbindungsstruktur beabstandet sein, das das Zusatzelement parallel, beispielsweise unterhalb oder oberhalb, zu dem Kühlkörper angeordnet werden kann, Somit können die Verbindungselemente eine weitere Funktionalität umsetzen.

Entsprechend dazu kann die Kühlvorrichtung mindestens das eine Zusatzelement aufweisen, das zwischen den mindestens zwei Verbindungselementen montiert ist. Dabei kann das mindestens eine Zusatzelement als Heizelement, als Verspannelement und/oder als Kühlelement ausgebildet sein. Die Kuhlvorrichtung kann eine Mehrzahl von Zusatzelementen aufweisen. Dabei können zusatzelemente mit unterschiedlichen Funktionen miteinander kombiniert werden. Entsprechend den Einsatzbedingungen oder gewünschten Funktionalitäten kann an jedem der Kühlkörper oder an bestimmten der Kühlkörper ein Zusatzelement vorgesehen sein. Auch können zwei oder mehr Zusatzelemente pro Körper vorgesehen sein. In diesem Fall können die Aufnahmeglieder ausgebildet sein, um mehrere Endabschnitte gleicher oder unterschiedlicher Zusatzelemente aufzunehmen. Beispielsweise können mehrere Endabschnitte nebeneinander angeordnet sein.

Ferner kann die Kühlvorrichtung eine Abdeckeinrichtung aufweisen. Die Abdeckeinrichtung kann sich durchgängig über eine Oberfläche zumindest eines ersten und eines zweiten der Mehrzahl von Kühlkörpern erstrecken und an die Oberflächen des zumindest eines ersten und eines zweiten Kühlkörpers angrenzen. Die Abdeckeinrichtung kann beispielsweise als Abdeckblech ausgebildet sein. Mittels des Abdeckblechs kann eine höhere Oberflächengüte der Kühlvorrichtung erzielt werden.

Ferner kann die Kühlvorrichtung mindestens einen Sammler aufweisen. Der Sammler kann mindestens eine Öffnung aufweisen und so mit zumindest zweien der Mehrzahl von Kühlkörpern verbunden sein, das jeweilige Endabschnitte der Fluidkanäle der zumindest zwei Kühlkörper in der mindestens einen Öffnung münden. Der Sammler kann als Sammelkasten ausgebildet sein. Der Sammler kann einen Innenraum aufweisen, aus dem das Fluid in die Fluidkanäle strömen kann oder in den das Fluid, von den Fluidkanälen kommend, strömen kann. Der Sammler kann eine Schnittstelle zwischen der Kühlvorrichtung und einer Verbindungsleitung eines Kühlkreislaufes bilden. Die Kühlvorrichtung kann zwei gegenüberliegend angeordnete Sammler aufweisen, so dass das Fluid aus einem der Sammler heraus in die Kühlkörper hineinströmen kann und aus den Kühlkörpern wiederum in den anderen der Sammler strömen kann. Dazu kann für jeden der Kühlkörper eine Öffnung in dem Sammler vorgesehen sein. Endbereiche der Kühlkörper können in die jeweilige Öffnung des Samm-. lers eingeführt sein.

Dabei kann die Kühlvorrichtung ein Verstärkungsprofil aufweisen, das mit dem Sammler und mindestens einem der zumindest zwei Kühlkörper verbunden ist. Mittels des Verstärkungsprofils kann eine Verbindungsstelle zwischen dem Sammler und dem mindestens einem Kühlkörper verstärken werden. Das Verstärkungsprofil kann als Winkelelement oder Dreieck ausgebildet sein.

Dabei kann die Veibindungssteile auf einer dem mindestens einem der Kühlkörper zugewandten Fläche des Sammlers außermittig, zu einem Randbereich des Sammlers hin verschoben angeordnet sein. In diesem Fall kann das Verstärkungsprofil auf einer dem Randbereich abgewandten Seite des mindestens einem der Kühlkörper angeordnet sein. Indem die Kühlkörper nach oben oder nach unten versetzt an dem Sammler angeordnet sind, wird Bauraum für das Verstärkungsprofil geschaffen,

Dabei kann zumindest ein Endbereich eines der Kühlkörper von einer Hülse umschlossen sein. Eine Innenstruktur der Hülse kann an eine Außenstruktur des Kühlkörpers und eine Außenstruktur der Hülse kann an die mindestens eine Öffnung des Sammlers angepasst sein. Die Außenkontur der Hülse kann gradflächig und mit gleichmäßigen Rundungen ausgeführt sein. Auf diese Weise kann eine Querschtiittfläche der Öffnung des Sammlers einfach gestaltet werden,

Die vorliegende Erfindung schafft ferner ein Verfahren zum Herstellen einer Kühlvorrichtung zur Kühlung elektrischer Komponenten, das die folgenden Schritte umfasst: Bereitstellen einer Mehrzahl von Kühlkörpern, die jeweils mindestens einen Fluidkanal und an parallel zu einer Haupterstreckungsrichtung des mindestens einen Fluidkanals verlaufenden Randbereichen jeweils eine Formschlussstruktur aufweisen; Anordnen der Mehrzahl von Kühlkörpern benachbart zueinander; und Formschlüssiges Verbinden der Mehrzahl von Kühlkörpern jeweils über einander gegenüberliegende Formschlussstrukturen der Kühlkörper. Mittels des erfindungsgemäßen Verfahrens kann die Kühlvorrichtung durch ein Zusammenfügen der entsprechenden Einzelteile hergestellt werden. Neben der Mehrzahl von Kühlkörpern können zusätzliche Verbindungselemente, Sammler und/oder Zusatzelemente bereitgestellt werden, im Schritt des Anordnen zu in Bezug zu den Kühlkörpern angeordnet und mit diesen formschlüssig oder auf andere Art verbunden werden.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung einer erfindungsgemäßen Kühlvorrichtung;
- Fig. 2: eine Darstellung einer weiteren erfindungsgemäßen Kühlvorrichtung;
- Fig. 3: eine Darstellung einer weiteren erfindungsgemäßen Kühlvorrichtung:
- Fig. 4: eine Darstellung einer weiteren erfindungsgemäßen Kühlvorrichtung;
- Fig. 5: eine Darstellung eines Zusatzelementes;
- Fig. 6: eine Darstellung eines weiteren Zusatzelements;
- Fig. 7: eine Darstellung einer weiteren erfindungsgemäßen Kühlvorrichtung;
- Fig.: 8 eine Darstellung einer weiteren erfindungsgemäßen Kühlvorrichtung;
- Fig. 9: eine Darstellung einer weiteren erfindungsgemäßen Kühlvorrichtung;
- Fig. 10: eine Darstellung einer weiteren erfindungsgemäßen Kühlvorrichtung;
- Fig. 11: eine Darstellung einer weiteren erfindlingsgeniäßen KÜhlvorrichtung;
- Fig. 12: eine Darstellung einer weiteren erfindungsgemäßen Kühlvorrichtung;
- Fig.: 13 Querschniltsdarstellungen einer erfindungsgemäßen Kühlvorrichtung;
- Fig, 14: QuerschriittsdarsteilLingen einer weiteren erfindungsgemäßen Kühlvorrichtung;
- Fig.15: eine Darstellung einer weiteren erfindungsgemä&en Küh!vorr!chtung;
- Fig.16: eine Darstellung einer weiteren erfindungsgernaßen Kühivorrichtung_{'},
- Fig, '17: eine Darstellung einerwelterenerfindungsgemäßen Kühlvorrichtung-,
- Fig. 18: eine Darstellung einer weiteren erfindungsgemäßen Kühlvorrichtung;
- Fig, 19: eine Darstellung einer weiteren erfindungsgemäßen Kühlvorrichtung;
- Fig. 20: eine Darstellung einer weiteren erfindungsgemäßen Kühlvorrichtung;
- Fig. 21: eine Darste!!ung einer weiterenerfindungsgemäßen Kühlvorrichtung_{;}
- Fig. 22: eine Darstellung eines erfindungsgemäßen Verschlusselements;
- Fig. 23: eine Darstellung einer weiteren erfindungsgemäßen Kühlvorrichtung;
- Fig. 24: eine Querschnittsdarstellungen einer erfindungsgemäßen Külvorrichtung;
- Fig, 25: eine QuerschnittsdarsteHungen einer weiteren erfindungsgemäßen Kühlvorrichtung;
- Fig. 26: eine Querschnittsdarstellungen einer weiteren erfindungsgemäßen Küh!vör'r!chtung;
- Fig. 27: eine Darstellung eines erfindungsgemäßen Kühlkörpers;
- Fig. 28: eine DarsteOungeinsserflndungsgemäßen Samm!ers;
- Fig. 29: eine Darstellung einer erfindungsgemäßen Hülse;
- Fig.: 30 eine DarsteBung eines Kühlkörpers mit einer erfindtitigsgemäßen Hülse; und
- Fig. 31: eine Dai"steilung eines erfhdungsgemäSen Sammiers,

In der nachfolgenden Beschreibung der bevorzugten Ausführungsbeispiele der vorliegenden Erfindung werden für die in den verschiedenen Zeichnungen dar" gestellten und ähnlich wirkenden Elemente gleiche oder ähnliche Bezugszeichen verwendet, wobei eine wiederholte Beschreibung dieser Elemente weggelassen wird.

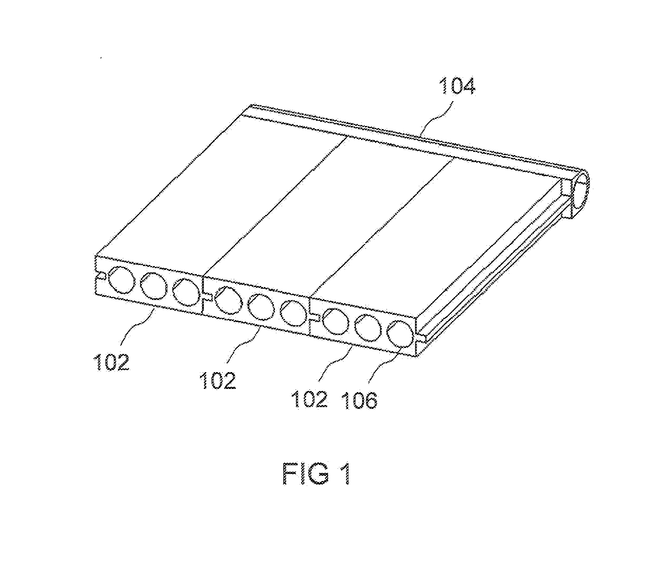

Fig. 1 zeigt eine Kühlvorrichtung gemäß einem Ausführungsbeispiel der vorliegenden Erfindung. Die Kühlvorrichtung weist drei Küh!körper 102 und einen Sammler 104 auf. Die Kühlkörper 102 weisen Jeweils Kühlkanäle 106 auf, von denen in Fig. 1 lediglich einer mit einem Bezugszeichen versehen ist. Gemäß diesem Atisführungsbeispiel weist jeder der Kühlkörper 102 drei Kühlkanäle 106 auf. Die Kühlkanäle 106 sind in einer Ebene nebeneinander angeordnet. Die Kühlkörper '102 sind gemäß diesem Ausführungsbeispiel als rechteckförmige Platten ausgebildet. Beispielsweise können die Kühlkörper 102 jeweils als ein Extrusionsprofil ausgebildet sein. Die Kühlkörper 102 sind entlang ihrer Längsseite nebeneinander angeordnet und über Formschussstrukturen miteinander verbunden. Jeder der Kühlkörper 102 weist an einem Randbereich eine erste Formschlussstruktur und an einem gegenüberliegenden Randbereich eine zweite Formsch!ussstruktur auf. Die Randbereiche kennzeichnen diejenigen Seitenflächen der Kühlkörper 102 an der benachbarte. Kühlkörper 102 aneinandergrenzen. Gemäß diesem Ausführungsbeispiel ist die erste FormschlussStruktur als Einbuchtung in Form einer Nut und die zweite Formschlussstruktur als Ausbuchtung in Form einer Feder ausgebildet. Die Einbuchtung und die Ausbuchtung können sich über eine Gesamtlänge der Randbereiche erstrecken Dabei sind die Einbuchtung und die Ausbuchtung so ausgeformt, dass sie ineinander gesteckt oder geschoben werden können, um eine formschlüssige Verbindung herzustellen, Somit können benachbarte Kühlkörper 102 über eine Nut-Feder-Verbindung zusammengefügt werden. Der Sammler 104 erstreckt sich über Endbereiche der kühlkörper -102 und kann mit diesen starr verbunden sein. Der Sammler 104 kann somit stirnseitig an den Kühlkörpern 102 angeordnet sein, so dass Enden der Kühlkanäle 106 in den Sammler 104 munden. Die Kiihlvoirichtung kann um weitere Kühlkörper 102 erweitert werden. Ebenso kann dem Sammler 104 gegenüberliegend ein weiterer Sammler angeordnet sein, so dass die Kühlkörper 102 zwischen den Sammlern angeordnet und mit diesen verbunden sind.

Die in Fig. 1 gezeigte Kühlvorrichtung kann als ein Kühler aus Extrusionsprofilen 102 mit Formschluss und/oder ausgebildet sein.

Gemäß einem Ausführungsbe!sp!ei besteht ein erfindungsgemäßer Kühler aus mindestens einem Strangpressprofil 102 und mindestens einem Sammlerprofil 104. Diese bilden die Fluidführung innerhalb des Kühlers. Die Strangpressprofile 102 können verschiedene Funktionen wie z.B. Fluidführung, Befestigung oder Strukturaufgaben beinhalten.

Über einen Formschluss werden die Strangpressprofile 102 miteinander gefügt. Desweiteren können zur thermischen Anbindung Übertragerblecfie an den fluidführenden Profilen 102 eingesetzt werden. Durch einen weiteren Prozess wie z,B, Kleben oder Löten können die Profile "102 dauerhaft miteinander verbunden werden.

Die Verbindung zwischen Sammlerprofil 104 und Strangpressprofil 102 kann über Stoffschluss, Formschluss oder weitere Bauteile wie z.B, Dichtungen sichergestellt werden. Der Wärmeübergang zwischen Fluid und Oberfläche des Kühlers kann variabel gestaltet sein, Generell sind verschiedene Durchströmungsarten möglich. Beispielsweise 1-, U-, S-, W-Flow oder eine Durchströmung mit mehreren Umlenkungen.

Verschiedene Anschlusstypen an den Kühler sind möglich, wie z,B. Schlauchstutzen, Einschraubstutzen oder 8chne!ikupp!ungsansch!üsse. Die Verbundplatte ermöglicht mehrere Fluidanschlüsse (1 bis X). Die Anschlusstypen können an dem Sammler 104 umgesetzt werden.

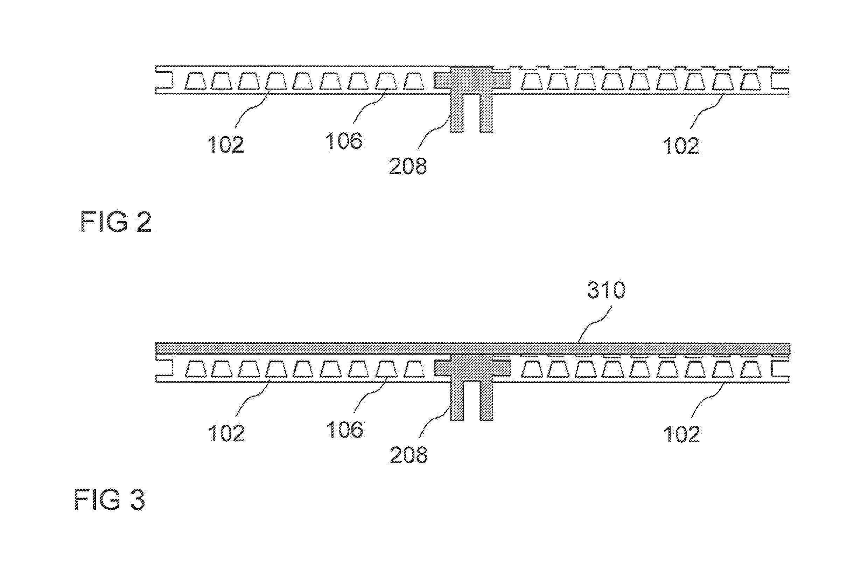

Fig. 2 zeigt eine Kühlvorrichtung gemäß einem weiteren Ausführungsbeispiel der vorliegenden Erfindung. Gezeigt ist eine Modularisierung von Kühlplatten gemäß einem Lego-Priiizip, Dabei können Siandard-Ext.rusionsprofi!e eingesetzt werden,

Die Kühlvorrichtung weist zwei Kühlkörper 102 auf, d!e jeweils eine Mehrzahl! von Kühlkanälen 106 aufweisen. Gemäß diesem Ausführungsbeispiel weist jeder der Kühlkörper neun t\Ühlkanale1 106 auf. Zwischen den zwei Kühlkörpern 102 ist ein Verbindungselement 208 angeordnet. Das Verbindungselement 208 ist ausgebildet, um die beiden Kühlkörper 102 miteinander zu verbinden. Dazu weisen die Kühlkörper 102 an gegenuberiiegenden Randbereichen jeweils die erste Formschiussstruktur als Einbuchtung in Form einer Nut auf. Das Verbin-dungse!ement 208 weist auf gegenüberliegenden Seiten entsprechende zweite Forrnsch!ussstrukturen als Ausbuchtungen in Form von Federn auf. Dabei sind die Einbuchtung und die Ausbuchtung so ausgeformt, dass sie ineinander gesteckt oder geschoben werden können, um eine formschlüssige Verbindung herzustellen, Somit können die beiden Kühlkörper 102 und das Verbindungselement 208 jeweils über eine Nut-Feder-Verbindung zusammengefügt werden. Das Verbindungselement 208 kann eine Dicke aufweisen, die einer Dicke der Kühlkörper '102 entspricht. Gemäß diesem Ausführungsbeispiei schießt eine Oberseite des Verbindungselements 208 nahtlos mit einer Oberfläche der Kühlkörper 102 ab. Somit ergibt sich eine durchgängIge ebene Fläche, die sich über die Oberfläche der Kühlkörper 102 und der Oberfläche des Verbindungselements ei-streckt. Auf der Oberfläche können beispielsweise zu kühlende oder generell zu temperierende Elemente angeordnet werden. Eine Unterseite des Verbindungse!ements 208 schließt ebenfalls mit einer Unterseite der Kühlkörper 102 ab, wobei auf der Unterseite des Verbindtingselements 208 Rippen angeordnet sind, die aus der Unterseite des Verb!ndungse!emenis 208 hervorstehen. Gemäß diesem Ausführungsbeispiel stehen zwei Rippen senkrecht von der Unterseite des Verbindungselements 208 ab. Die Kiihlvorrichtung kann um weitere Kühlkörper 102 erweitert werden.

Eine Herausforderung für einen eingesetzten Lötprozess besteht in einer Ober-f1äctieng1ite in Bezug auf eine Ebenheit und Rauigkeit der Oberfläche, beispielsweise des links angeordneten Kühlkörpers 102. Bezüglich der Oberfläche des rechts angeordneten Kühlkörpers 102 kann eine kA-Anpassung erfolgen, Es wird eine Verlötung im Durchzug durchgeführt mit eher Nuttiefe von beispielsweise 0,2mm bis 0,3mm,

Als Extrusionsprofile 102 können Standardkühlprofile, entsprechend einer Durchzugskontur im Kasten, spezifisch für Kältemittel, mit und ohne !tA-Anpassung, sowie spezifisch für Kühlmittel, mit und ohne kA...Anpassu.ng, eingesetzt werden.

Das Verbindungselement 208 in Form eines Abstandshalters oder Spacers kann mit Versteifungsrippen oder Montagerippen als Verbinder zwischen Standardkühlprofilen 102, die nicht durch Durchzüge im Kasten gehen, ausgebildet sein.

Als optionale Zusatz.funktionen, die standardisiert auf die Unterseite der Kühlvorrichtung montiert., z.B, verstemmt, werden, kommen eine Heizung, Rippen für eine Unterbodenkühlung oder eine Unterboden-Verspannung in Frage. Eritsprechende Zusatzfunktionen sind in Fig, 4 gezeigt. Andere Zusatzfunktionen können in entsprechender Weise realisiert werden.

Fig. 3 zeigt eine Kühlvorrichtung gemäß einem weiteren Ausführungsbeispiel der vorliegenden Erfindung. Die gezeigte Kühlvorrichtung entspricht der anhand von Fig. 2 beschriebenen Kuh!vorrichtung, wobei zusätzlich eine Abdeckeinrichtung 310 auf der Oberfläche der Kühlvorrichtung angeordnet ist. Die Abdeckeinrichtung 310 überspannt die beiden l<:ühlk6rper 102 und das Verbindungselement 208 und steht in direkten Kontakt zu denselben.

Die .>Nbdeckeifiri<:htung 310 kann als ein Abdeckblech ausgebildet sein, Die Abdeckeinrichtung 310 kann vorteilhaft sein, falls die Oberflächengüte nicht ausreichend ist. Die Abdeckeinrichiung 310 kann applikationsspezifisch sein, Eine Herausforderung besteht darin, die kA-Anpässung vernünftig zu realisieren.

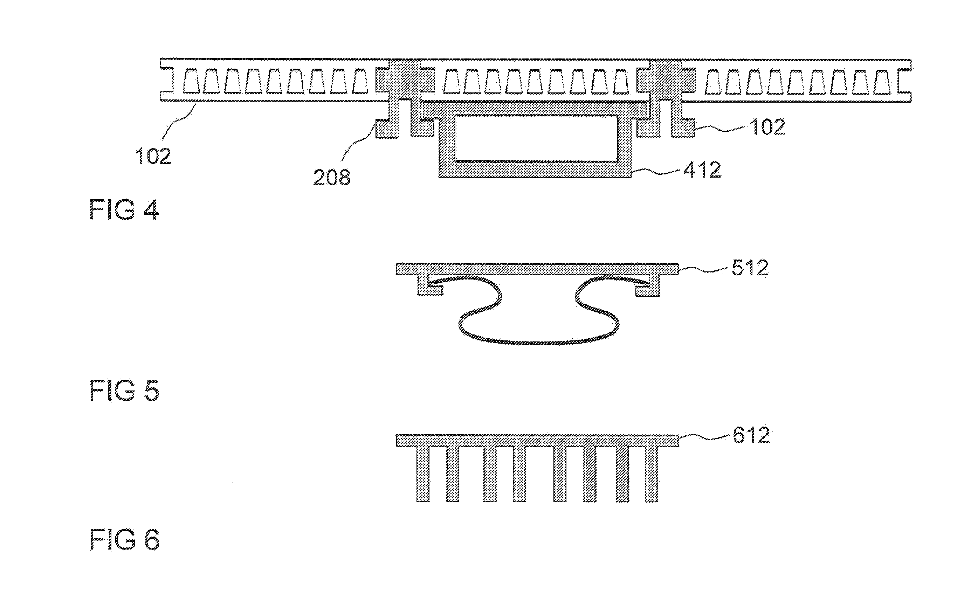

Fig. 4 zeigt eine Kühlvorrichtung gemäß einem weiteren Ausführui-gsbeispiel der vorliegenden Erfindung. Gezeigt ist eine Modularisierung von Kühlplatten gemäß einem Lego-Prinzip mit Zusatzfunktionen.

Die Kuh!vorrichtung weist drei Kiihli<öi'per 102 auf, die jeweils eine Mehrzahl von Kühlkanälen aufweisen, Gemäß diesem Ausführungsbeispiel weist jeder der Kühlkörper neun Kühlkanäle 106 auf. Zwischen zwei benachbarten Kühlkörpern 102 ist jeweils ein Verbindungselement 208 angeordnet. Das Verbindungselement 208 ist ausgebildet, um die beiden Kühlkörper .leu2 miteinander zu verbinden, wie es anhand von Fig, 2 beschrieben ist. Gemäß diesem Ausführungsbeispiel schießt eine Oberseite des Verbindungselements 208 nahtlos mit einer Oberfläche der Kühlkörper 102 ab. Eine Unterseite des Verbindungselements 208 schließt ebenfalls mit einer Unterseite der Kühlkörper 102 ab, wobei auf der Unterseite des Verbindungselements 208 Auftiahuleglieder angeordnet sind, die aus der Unterseite des Verbindungselements 208 hervorstehen. Gemäß diesem Ausführungsbeispiel stehen zwei abgewinkelte Führungsschienen senkrecht von der Unterseite des Verbindungselements 208 ab. Jedes der Aufnahmeglieder formt eine Führungsnut für ein Funktionserweiterungsprofil aus. Dabei sind die beiden Führungsnuten eines Verbindufigselements 208 jeweils nach außen gerichtet, das heißt sie zeigen voneinander weg. In die Führungsnuten können jeweils Endabschnitte einer Trägerplatte oder einer Trägerschiene eines Zusatze!ements 412 eingeführt werden. Im montierten Zustand ist das Zusatzelement 412 auf der Unterseite des mittleren Kühlkörper 102 angeordnet. Eine Berührungsfläche des Zusatzelements 412 kann dabei im direkten Kontakt zu der Unterseite des mittleren Kühlkörpers stehen. Gemäß diesen-i Ausführungsbeispiel ist das Zusatze!ement 412 als eine Heizung ausgebildet. Die Heizung kann eingesetzt werden, um den darüber angeordneten Kühlkörper 102 zu temperieren, in diesem Fall beispielsweise zu erwärmen.

Fig. 5 zeigt ein Zusatzelement 512 gemäß einem weiteren Ausführungsbeispiel. Das Zusatzelement 512 kann wie in Fig, 4 gezeigt zwischen zwei Verbindungselementen montiert werden, Das Zusatzelement 512 bietet die Funktionalität einer Verspannung gegen einen Unterboden. Das Zusatzelement 512 weist eine Trägerplatte auf, deren Endabschnitte in Aufnahmeglieder gegenihberliegender Verbindungselemente eingeführt werden können. Auf einer dem Kühlkörper abgewandten Seite der Trägerp!atte sind zwei gegenüberliegende Führungsnuten angeordnet, zwischen denen ein Federe!ement eingespannt werden kann.

Fig. 6 zeigt ein Zusatzelement 612 gemäß einem weiteren Ausführungsbeispiel. Das Zusatze!ement 612 kann wie in Fig. 4 gezeigt zwischen zwei Verbindungselemente montiert werden. Das Zusatzelei1°en< 612 weist Rippen für eine Unterbodenküh1ung auf, Das Zusatzelement 612 weist eine Trägerplatte auf, deren Endabschnitte in Aufnahmeg!ieder gegenÜberliegender Verbindungselemente eingeführt werden können. Auf einer dem Kühlkörper abgewandten Seite der Trägerplatte sind eine Mehrzahl von Rippen angeordnet.

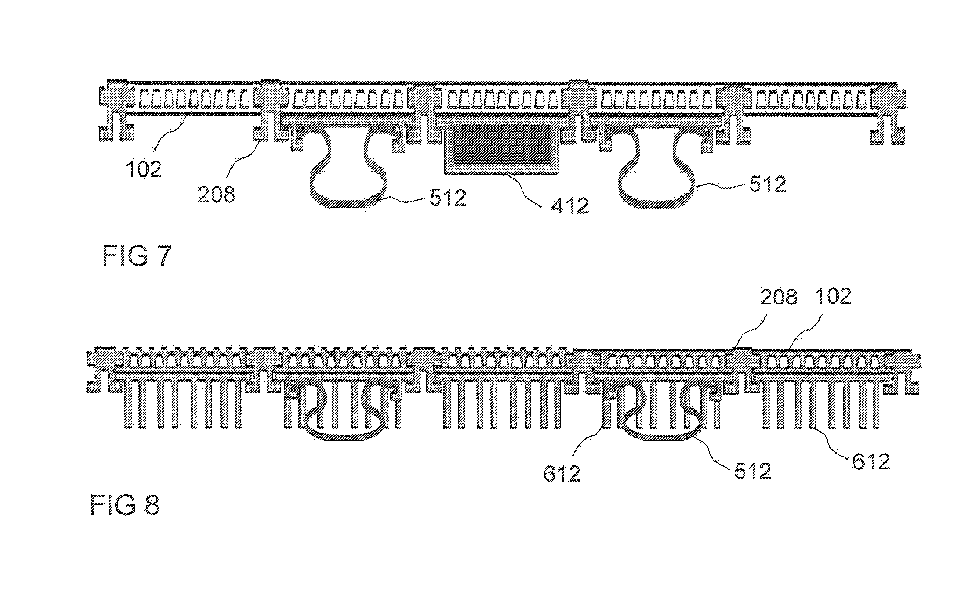

Fig. 7 zeigt eine Kühlvorrichtung gemäß einem weiteren Ausführungsbeispiel der vorliegenden Erfindung, Gezeigt ist eine Moduiar!s!erung von Kühlplatten gemäß einem Lego-Pritizip.

Die Kühlvorrichtung weist als eine Erweiterung zu dem in Fig, 4 gezeigten Ausführungsbeispiel fünf Kühlkörper 102 auf, die jeweils ein Verbindungselement 208 miteinander verbunden sind. Unterhalb des mittleren Kühlkörpers 102 ist das Zusatzelement 412 in Form einer Heizung angeordnet. Unterhalb der beiden angrenzenden Kühlkörper 102 ist jeweils das Zusatzelement 512 in Form der Verspannung gegen den Unterboden angeordnet, Die beiden äußeren Kühlkörper102 weisen kein Zusatzelement auf.

Fig. 8 zeigt eine Kühlvorrichtung gemäß einem weiteren Ausführungsbeispiel der vorliegenden Erfindung. Die Kühlvorrichtung entspricht der in Fig, 7 gezeigten Kühlvorrichtung und unterscheidet sich davon lediglich in der Wahl der Zusatzelemente.

Gemäß diesem Ausführungsbeispiel sind unterhalb aller Kühlkörper 102 Zusatzelemente 612 mit Rippen für eine Unterbodenkühlung angeordnet. Unterhalb der beiden an den mittleren Kühlkörper 102 angrenzenden Kühlkörper 102 ist jeweils zusätzlich das Zusatzelement 512 in Form der Verspannung gegen den Unterboden angeordnet.

Die in den Figuren 7 und 8 gezeigten Ausführungsbeispiele können variiert werden, indem Zusatzelemente in beliebiger Kombination eingesetzt werden.

Gemäß einem Ausführungsbeispiel können bei der erfindungsgemäßen Kühlvorrichtung acht unterschiedliche Profile in unterschiedlichen Varianten miteinander kombiniert werden. Dabei können Profile mehrfach eingesetzt werden. Die Profile umfassen zwei verschiedene Profile für Kühlmittel (Standard und Standard + kA-Anpassung), zwei verschiedene Profile für Kältemittel (Standard und Standard + kA-Anpassung) sowie vier Zusatzprofile, umfassend eine Heizung, einen Spacer, eine Verspannung und Rippen.

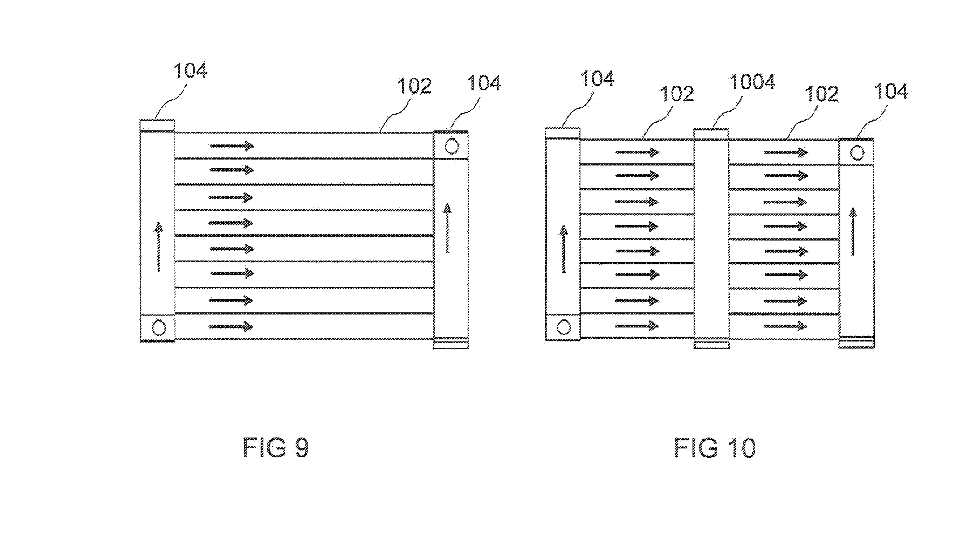

Die Figuren 9 bis 12 zeigen Kühlvorrichtung gemäß weiteren Ausführungsbeispielen der vorliegenden Erfindung, wobei insbesondere unterschiedliche darstellbare Strömungsfelder, sogenannte flow-fields, gezeigt sind. Die Verbindungen zwischen den Kühlkörpern der gezeigten Kühlvorrichtungen können entsprechend den vorrangegangenen Ausführungsbeispielen ausgeführt sein.

Die in den Figuren 9 und 10 gezeigten Kühlvorrichtungen setzen i-Strömungen, sogenannte i-flows, um.

Fig. 9 zeigt eine Kühlvorrichtung gemäß einem weiteren Ausführungsbeispiel der vorliegenden Erfindung. Die Kühlvorrichtung weist acht nebeneinanderliegende Kühlkörper 102 und zwei Sammler 104 auf. Die Kühlkörper 102 sind zwischen den zwei Sammlern 104 angeordnet und mit diesen verbunden. Die Kühlkörper 102 weisen eine längliche Form auf, wobei sie an ihren Längsseiten aneinandergrenzen und an ihren jeweiligen Stirnseiten an die Sammler 104 grenzen.

Die Sammler 104 weisen jeweils einen Anschluss auf, durch den ein Fluid in den jeweiligen Sammler 104 einströmen oder ausströmen kann. Die Anschlüsse an beiden Sammlern 104 sind schräg gegenüber angeordnet, hier am unteren Ende des links dargestellten Sammlers 104 und am oberen Ende des rechts dargestellten Sammlers 104. Wie durch Pfeile angedeutet, kann das Fluid gemäß diesem Ausführungsbeispiel durch den Anschluss des links dargestellten Sammlers 104 in diesen Sammler 104 einströmen, wird anschließend von dem Sammler 104 auf die Kühlkörper 102 verteilt, strömt durch die Kühlkörper 102 hindurch in den rechts dargestellten Sammler 104 und aus dem Anschluss des rechts dargestellten Sammlers 104 wieder heraus. Somit ist die Flussrichtung des Fluids durch beide Sammler 104 gleichgerichtet Ebenso ist die Flussrichtung des Fluids durch die Kühlkörper '102 gleichgerichtet. Die Anschlüsse der Sammler 104 können mit entsprechenden Leitungen eines Kühlkreislaufes verbunden sein.

Fig, 10 zeigt eine Kühlvorrichtting gemäß einem weiteren Ausführungsbeispiel der vorliegenden Erfindung, Die Kühlvorrichtung weist zwei Reihen von jeweils acht nebeneinanderlegenden Kühlkörpern °102, zwei Sammler 104 und einen Zwischenkasten 1004 auf. Der Zwischenkasten 1004 kann wegen einer kA-Anpassung in Lauflänge vorgesehen sein, Eine erste Reihe von Kühlkörpern 102 ist zwischen einem ersten der zwei Sammler 104 und dem Zwischenkasten 1004 angeordnet und mit diesen verbunden, Die Kühlkörper °102 weisen eine längliche Form auf, wobei sie an ihren Längsseiten aneinandergrenzen und an ihren jeweiligen Stirnseiten an den Sammler 104 sowie an den Zwischenkasten 1004 angrenzen. Eine zweite Reihe von Kühlkörpern 102 ist zwischen dem Zwischenkasten 1004 und einem zweiten der zwei Sammler 104 angeordnet und mit diesen verbunden, Die Kühlkörper 102 weisen entsprechend den Kühlkörpern 102 der ersten Reihe eine längliche Form auf, wobei sie an ihren Längsseiten aneinandergrenzen und an ihren jeweiligen Stirnseiten an den Sarruₗ1!er 104 sowie an den Zwischenkasten 1004 angrenzen.

Die Sa>nnilei" 104 weisen jeweils einen Anschluss auf, durch den ein Fluid in den jeweiligen Sammler 104 einströmen oder ausströmen kann. Die Anschlüsse an beiden Sammlern 104 sind schräg gegenüber angeordnet, hier am unteren Ende des links dargestellten Sammlers 104 und am oberen Ende des rechts dargestellten Sammlern 104. Wie durch Pfeile angedeutet, kann das Fluid gemäß diesem Ausführungsbeispiel durch den Anschluss des links dargestellten Sammlers 104 in diesen Sammler 104 einströmen, wird anschließend von dem Sammler 104 auf die Kühlkörper 102 der ersten Reihe verteil, strömt durch die Kühlkörper 102 der ersten Reihe hindurch in den Zwischenkasten 1104 hinein und aus dem Zwischenkasten 1104 heraus in die Kühlkörper 102 der zweiten Reihe verteilt, strömt durch die Kühlkörper 102 der zweiten Reihe hindurch in den rechts dargestellten Sammler 104 und aus dem Anschluss des rechts dargestellten Sammlers 104 wieder heraus, Somit ist die Flussrichtung des Fluids durch beide Sammler 104 gleichgerichtet. Ebenso ist die Flussrichtung des Fluids durch die Kühlkörper 102 gleichgerichtet Die Anschlüsse der Sammler 104 können mit entsprechenden Leitungen eines Kühlkreislaufes verbunden sein.

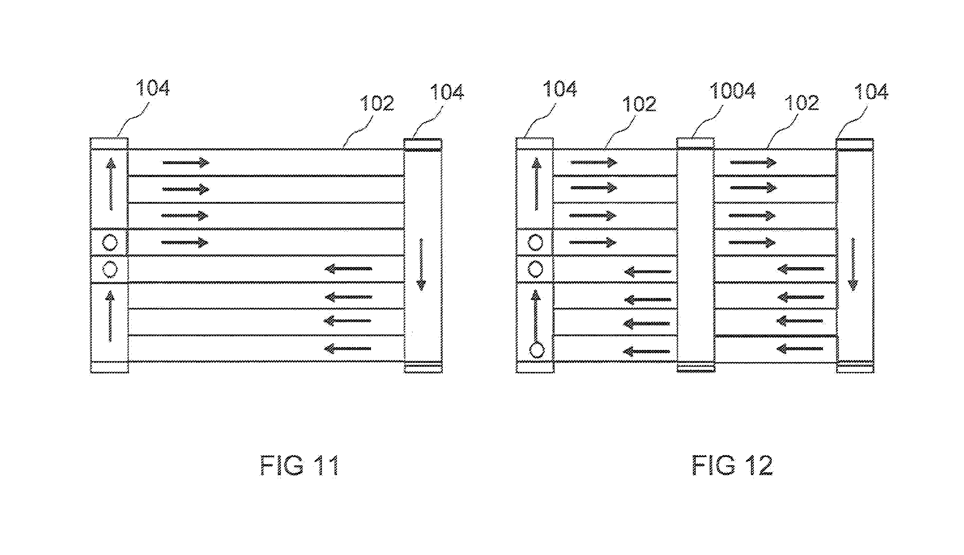

Die in den Figuren 11 und 12 gezeigten Kühlvorrichtungen setzen u-Strömungen, sogenannte u-f!ows, um.

F!g. 11 zeigt eine Kühlvorrichtung gemäß einem weiteren Ausführungsbeispiel der vorliegenden Erfindung, Die Kühlvorrichtutig weist acht nebeneinanderliegende Kühlkörper 102 und zwei Sammler 104 auf. Die Kühlkörper .1 02 sind zwischen den zwei Sammlern 104 angeordnet und mit diesen verbunden, Die Kühlkörper 102 weisen eine längliche Form auf, wobei sie an ihren Längsseiten aneinandergrenzen und an ihren jeweiligen Stirnseiten an die Sammler 104 grenzen.

Der links dargestellte Sammler 104 weist mittig angeordnet zwei Anschlüsse auf, durch die ein Fluid in den Sammler 104 einströmen und wieder ausströmen kann. Der rechts dargestellte Sammler 104 weist keine entsprechenden Anschlüsse auf. Wie durch Pfeile angedeutet, kann das Fluid gemäß diesem Ausführui-gsbeispiel durch den oberen Anschluss des links dargestellten Sammlers 104 in diesen Sammler 104 einströmen, wird anschießend von dem Sammler 104 auf die oberen vier Kühlkörper 102 verteilt, strömt durch diese Kühlkörper 102 hindurch in den rechts dargestellten Sammler 104, wird anschließend von diesem Sammlers 104 auf die unteren vier KÜh!körper'1 102 verteilt, strömt durch diese Kühlkörpern 102 hindurch in den links dargestellten Sammler 104 und aus dem unteren Anschluss dieses Sammler 104 wieder heraus. Somit ist die Flussrichtung des Fluids durch die vier oberen Kühlkörper 102 entgegen gerichtet zu der Flussrichtung des Fluids durch die vier unteren Kühlkörper 102. Die Anschlüsse des links dargestellten Sammlers 104 können mit entsprechenden Leitungen eines Kühlkreislaufes verbunden sein.

Fig. 12 zeigt eine Kühlvorrichtung gemäß einem weiteren Ausfuhrungsbeispiei der vorliegenden Erfindung. Die Kühlvorrichtung Weist zwei Reihen von jeweils acht nebeneinanderlegenden Kühlkörpern 102, zwei Sammler "104 und einen Zwisclienkasten. 1004 auf, Der Zwischenkasten 1004 kann wegen einer kA-Anpassung In 1-auflänge vorgesehen sein, Eine erste Reihe von Kühlkörpern 102 ist zwischen einem ersten der zwei Sammler 104, der entsprechend zu Fig. 11 zwei Anschlüsse aufweist und dem Zwischenkasten 1004 angeordnet und mit diesen verbunden. Die Kühl,körper 102 weisen eine längliche Form auf, wobei sie an ihren Längsseiten aneinandergren.zen und an ihren jeweiligen Stirnseiten an den Sammler 104 sowie an den Zwischenkasten 1004 angrenzen. Eine zweite Reihe von Kühlkörpern 102 ist zwischen dem Zwischenkasten 1004 und einem zweiten der zwei Sammler 104 angeordnet, der entsprechend zu Fig. 11 keinen Anschluss aufweist, und mit diesen verbunden. Die Kühlkörper 102 weisen entsprechend den Kühlkörpern 102 der ersten Reihe eine längliche Form auf, wobei sie an ihren Längsseiten aneinandergrenzen und an ihren jeweiligen Stirnseiten an den Sammler 104 sowie an den Zwischenkasten 1004 angrenzen.

Ein Fluidfluss durch die in Fig. 11 gezeigte Kühlvorrichtung entspricht dem Fluidfluss, wie er anhand der Fig. 12 beschrieben ist, wobei das Fluid zusätzlich durch den Zwischenkasten 1004 strömt.

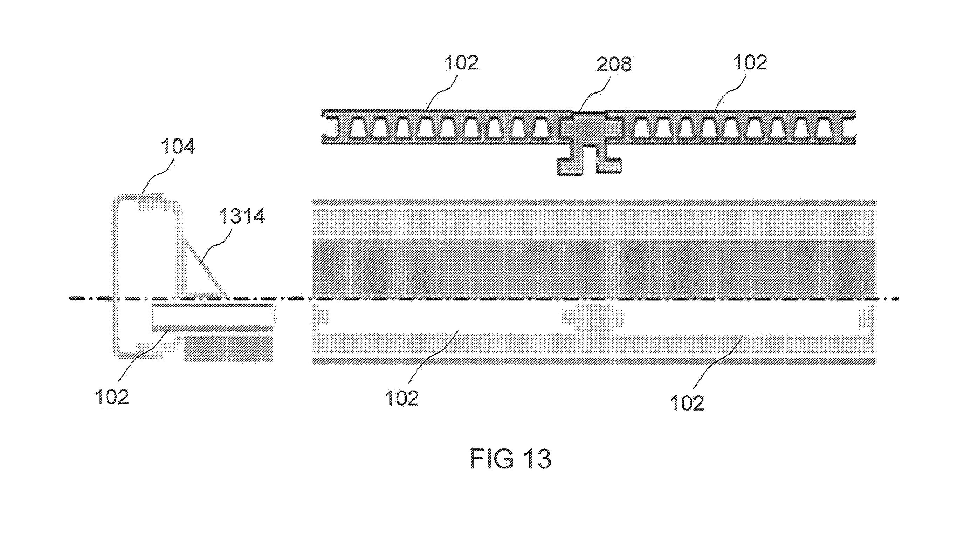

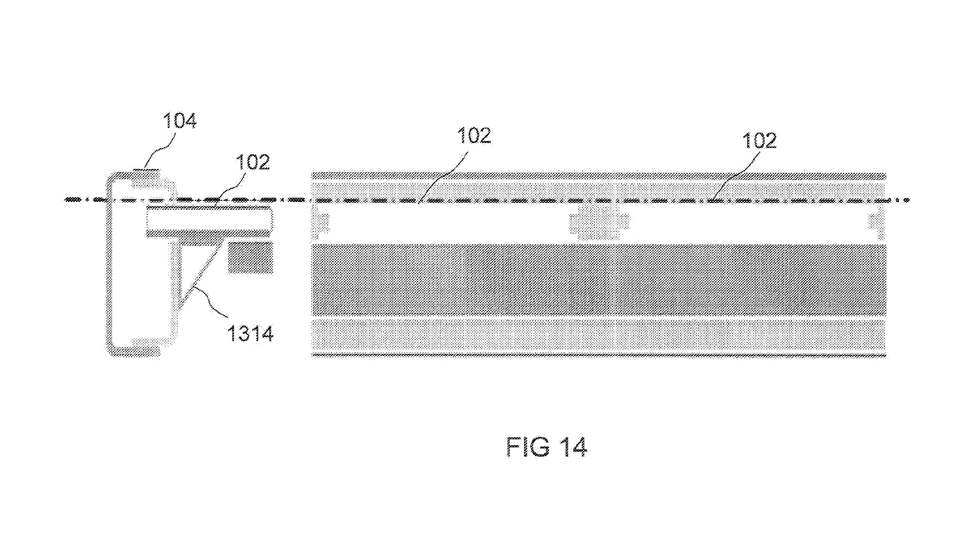

Die Figuren 13 und 14 zeigen KÜhlvorrichtungen gemäß weiteren Ausführungs" beispielen der vorliegenden Erfindung, insbesondere sind Querschnittdarstellungen der Kühlvorrichtungen gezeigt. Gemäß diesen AusfLihrungsbeisp!e!en werden ein oder mehrere Verstärkungsprofile, z.B. Dreiecksprofile, eingesetzt, um eine ausreichende Steifigkeit, insbesondere Biegesteifigkeit und Verwindunsssteifigkeii, im Übergang Profile und Kasten zu erreichen. Ein Problem hinsichtlich der Steifigkeit kann durch eine Dreheung der Profile um 90°!m Vergleich zu klassischen Kühlern auftreten. Die gezeigte Lösungsmöglichkeit in Form eines Verstärkungsprofils führt zu einem erhöhten Bauraumbedarf und bei dem in Fig. 13 gezeigten Ausführungsbeispiel zu einer reduzierten Kühlfläche

Fig. 13 zeigt in einer oberen Darstellung einen Querschnitt durch eine Kühlvor richtung mit zwei Kühlkörpern 102 und einem Verbindungselement 208, wie sie bereits an anderen AusfÜhrungsbeispielen beschrieben ist

In einer Darstellung unten links zeigt Fig. 13 einen Querschnitt durch einen Sammler 104 und einen in den Sammler 104 eingesteckten Kühlkörper 102. Der Sammler 104 kann dazu eine Öffnung in die der Kühlkörper eingeführt werden kann, so dass ein Fluidaustausch zwischen den Fluidkanälen des Kühlkörpers 102 und dem Sammler 104 ermöglicht wird, An einer außenliegenden Kontaktstelle zwischen dem Sammler 104 und dem Kühlkörper 102 ist ein Verstärkungsprof!! 1314 angeordnet. Das Verstärkungsprofil 1314 ist als Winkel ausgebildet, dessen Schenkel jeweils auf angrenzenden Oberflächen des Sammlers 104 und des Kühlkörpers 102 anlegen, Somit ist einer der Schenkel parallel einer Oberfläche des Kühlkörpers 102 und der andere der Schenkel parallel zu einer Oberfläche des Sammlers 104 ausgerichtet Die Oberflächen des Kühlkörpers 102 und des Sammlers 104 können rechtwinklig zueinander ausgerichtet sein. Das Verstärkungsprofil 1314 kann starr mit dem Sammler 104 und dem Kühlkörper 102 verbunden sein. Gemäß diesem Ausführungsbeispiel ist der Kühlkörper 102 in einem unteren Bereich des Sammlers 104 in denselben eingesteckt. Das Verstärkungsprofil 1314 ist auf der Oberseite des Kühlkörpers 102 angeordnet und nutzt den freien oberen Bereich des Sammlers 104, Das Verstärkungsprofil 1314 kann durchgängig entlang der Längsseite des Sammlers 104 ausgeführt sein. Alternativ können mehrere einzelne Verstarkungsprofiie 1314 eingesetzt werden.

In einer Darstellung unten rechts zeigt Fig. 13 einen Querschnitt in Längsrichtung durch den Sammler 104 und in den Sammler 104 eingesteckte Kühlkörper 102.

Gemäß dem in Fig..13 gezeigten Ausführungsbeispiel ist eine Kastenausrichtung nach oben umgesetzt. Der Vorteil besteht in einem geringen Bauraumbedarf nach unten. Dafür reduziert das Verstärkungsprof!! die nutzbare Kühlfläche.

Fig. 14 zeigt ist wiederum auf eine Kühlvorrichtung mit zwei Kühlkörpern 102 und einem Verbindungselement 208 ausgerichtet, wie sie in der oberen Darstellung von Fig. 13 gezeigt ist.

In einer linken Darstellung zeigt Fig. 13 einen Querschnitt durch einen Sammler 104 und einen in den Sammler 104 eingesteckten Kühlkörper 102, Der Sammler 104 kann dazu eine Öffnung aufweisen, in die der Kühlkörper 102 eingeführt werden kann. An einer Kontaktstelle zwischen dem Sammler 104 und dem Kühlkörper 102 ist ein Verstärkungsprofil 1314 angeordnet, Das Verstärkungsprofil 1314 ist a!s Winkel ausgebildet, dessen Schenkel jeweils auf angrenzenden Oberflächen des Sammlers 104 und des Kühlkörpers 102 anliegen, Das Verstärkungspröfil 1314 kann starr mit dem Sammler 104 und dem Kühlkörper 102 verbunden sein, Gemäß diesem Ausführungsbeispiel ist der Kühlkörper 102 in einem oberen Bereich des Sammlers 104 in denselben eingesteckt. Das Verstärkungsprofil 1314 ist auf der Unterseite des Kühlkörpers 102 angeordnet und nutzt den freien unteren Bereich des Sammlers 104,

In einer rechten Darstellung zeigt Fig. 14 einen Querschnitt in Längsrichtung durch den Sammler 104 und in den Sammler 104 eingesteckte Kühlkörper 102. Gemäß dem in Fig. 14 gezeigten Ausführungsbeispiel ist eine Kastenausrichtung nach unten umgesetzt. Der Vorteil besteht darin, dass keine Reduzierung der Kühlfläche durch das Verstärkungsprofil 1314 vorliegt. Dafür besteht ein erhöhter Bauraumbedarf nach unten, was bei einer U-Bodenkühlung problematisch sein kann.

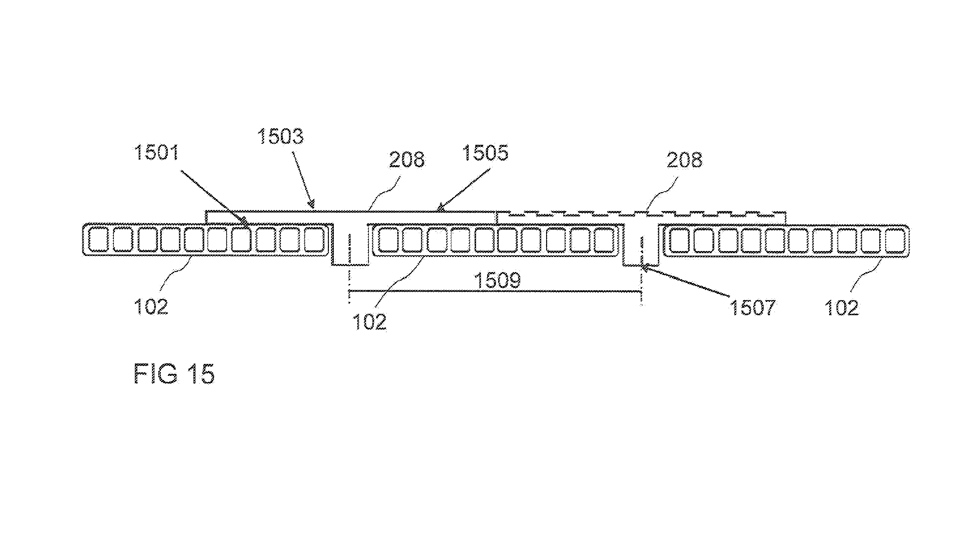

Fig. 15 zeigt eine Darstellung einer Kühlvorrichtung, gemäß einem weiteren Ausführungsheispie! der vorliegenden Erfindung. Gezeigt ist eine Modularisierung einer Kühlplatte nach dem Konzept Flachrohr, Spacer und Kasten. Die Kühlvorrichtung weist benachbart angeordnete Kühlkörper 102 auf. Zwischen zwei benachbarten Kühlkörpern 102 ist jeweils ein Verbindungselement 208 angeordnet. Die Verbindungselemente 208 weisen gemäß diesem Ausführungsbeispiel ein T-Profil auf. Dabei ist ein Mittelteil eines Verbindungselements jeweils zwischen benachbarten Randbereichen der Kühlkörper 102 angeordnet. Der f\,r1Jtte!teil kann eine Länge aufweisen, die mindestens einer Dicke der KOhlkörper 102 entspricht An einem Ende des Mittelteils kann eine Platte angeordnet sein, die auf den Oberflächen der angrenzenden Kühlkö"per 102 aufliegt, Die Kühlkörper 102 können stoffschlüssig, beispielsweise durch Verlöten, mit dem Verbindungselement 208 verbunden sein, Die stoffschlüssige Verbindung kann jeweils in einem Berührungsbereich 1501 der Oberflächen der Kuhlkörper 102 mit der Platte des Verbindungselements 208 ausgeführt sein. Das Verbindungselement kann einstückig ausgebildet sein.

Bei dem gezeigten Prinzip einer Kühlvorrichtung können Standard-Extrus!onsprof!!e eingesetzt werden. Gemäß, diesem Ausführungsbeispiel werden die Küh!körper 102 und die Verbindungselement 208 mittels eines Lötprozess miteinander verbunden, der eine Herausforderung darstellt In dem Bereich 1501 erfolgt eine Verlötung des Flachrohrs 102. In einem Bereich 1503 ist eine hohe Oberflächengüte, beispielsweise in Bezug auf die Ebenheit und die Rauigkeit erforderlich, Die Verbindungselemente 208 können als Spacer oder Abstandshalter ausgebildet sein. In einem Bereich 1505 weisen die Verbindungselemente eine Funktionsfläche zur Kontaktierung eines Zellverbunds auf. In einem Bereich 1507 weisen die Verbindungseiemente e!nen Funktionsbereich zur Montage einer oder mehrerer Zusatzfunktionen auf. Ein ¹"eilungsinass 1 5>09 ist als Abstand zwischen zwei benachbart angeordneten Verbindungselementen 208 gezeigt.

Gemäß diesem Ausführungsbeispiel können Standafd-Kühiprofii'e 102 (Durchzüge im Kasten) eingesetzt werden, die spezifisch und optimiert für Kältemittel oder spezifisch und optimiert für Kühlmittel ausgeführt sein können.

Ferner können Standard-Spacer 208 als thermisch,-strukturelle Verbinder zwischen Standard-Kühlprofilen 102 (keine Durchzüge in Kasten) mit Funktionsbereich 1507 ,,standardisierte Montage von Zusatzfunktionen auf Unterseite" mit Funktionsfläche 1505 "Kontaktierung Zellverbund" (mit und ohne kA-Anpassung, elektrische Isolation, etc.) eingesetzt werden.

Als optionale Zusatzfunktionen kann eine Heizung, Rippen für Unterbodenkühlung, eine Unterboden-Verspannung oder eine Aufnahmefläche für Spanngurte sowie eine Isolation vorgesehen werden.

Dabei ist die Kühlvorrichtung ausgelegt, um möglichst wenig z-Bauraum zu beansprüchen, Dadurch weist die Kühlvorrichtung eine geringe Dicke auf.

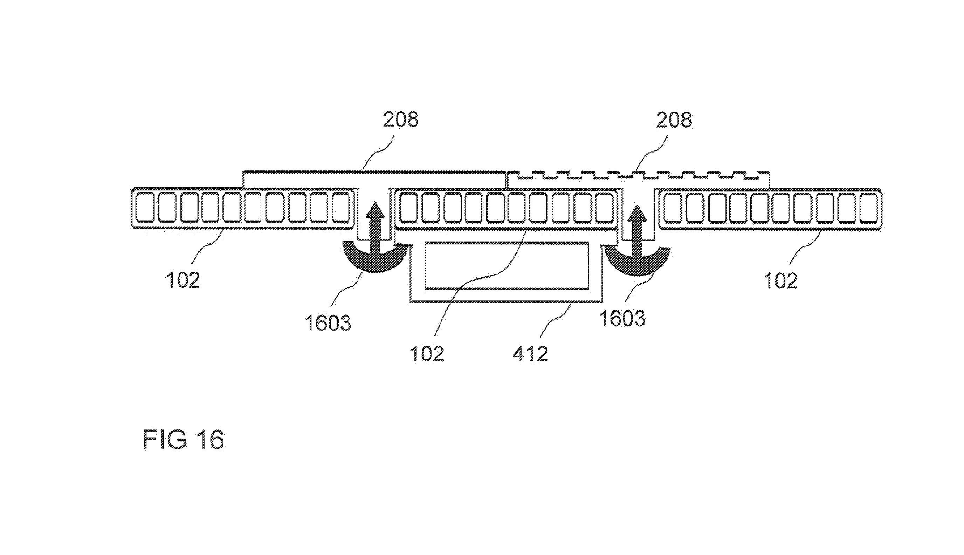

Fig.16eine Darstellung einer Kühlvorrichtung, gemäß einem weiteren Ausführungsbeispiel der vorliegenden Erfindung. Dabei ist eine Modularisierung der Küh!p!atte mit Zusatzfunktionen gezeigt, Eine Anbindung kann dabei über eine standardisierte Montage erfolgen,

Gemäß diesem Ausführungsbeispiel weisen die Verbindungseiemente 208 jeweils ein Verschlus.selemenl 1603 auf. Die Verbindungseiemente 208 können jeweils eine Aussparung aufweisen, die auf einer der auf den Oberflächen der Kühlkörper 102 aufliegenden Platte der Verbindungseiemente 208 gegenüber liegenden Seite angeordnet ist. Das Verschlusselement 1603 kann in die Aussparung eines Verbindungselements 208 eingeführt werden und formschlüssig, kraftschlÜssig und/oder stoffschlüssig mit dem Ve:ri>iridungselement 208 verbunden werden. Jedes der Verschlusselemente li103 kann Fixiereinrichtungen aufweisen, die im montierten Zustand der Verschlusselemente 1603 gegen eine Seite der Kühlkörper 102 oder eines an einem Kühlkörper 102 angeordneten Zusatzelements 412 in Richtung der Platte des Verbindungselements drucken. Auf diese Weise wird über das Verbindungselement 208 eine feste Verbindung zwischen benachbarten Kühlkörpern 102 geschaffen,

Gemäß diesem Ausführungsbeispie! ist unterhalb des mittleren Kühlkörpers 102 eine Hebung 412 angeordnet. Alternativ können, wie in den Figuren 5 und 6 gezeigt, auch eine Verspannung gegen einen Unterboden oder Rippen für eine Unterbodenkühlung vorgesehen sein.

Fig, 17 zeigt eine Darstellung einer Kühlvorrichtung mit einer Heizung 412 und Verspannungen 512 am Unterboden, gemäß einem weiteren Ausführungsbeispiel der vorliegenden Erfindung. Die Heizung 412 und die Verspannungen 512 werden Jeweils durch Verschlusselemente 1603 fixiert

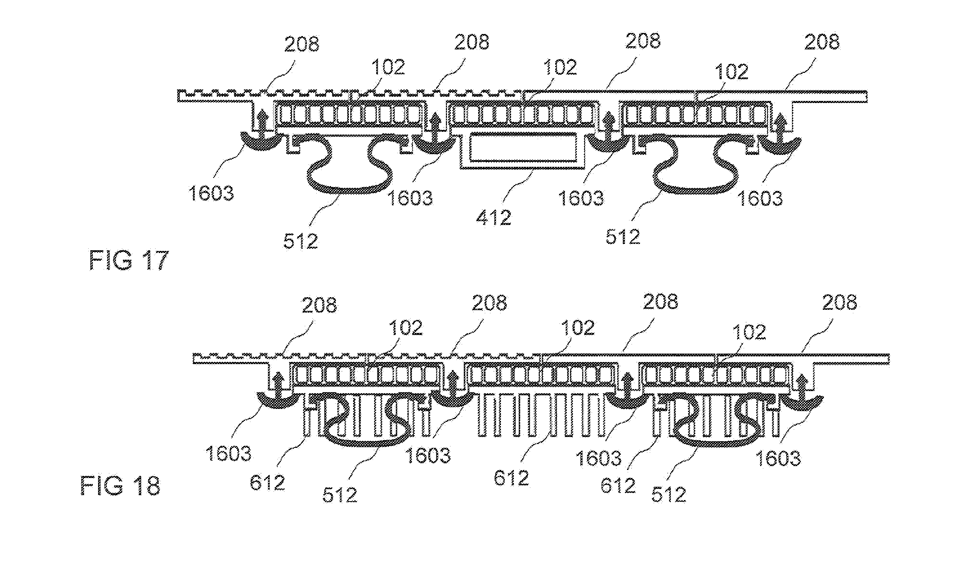

Fig. 18 zeigt Darstellung einer Kühlvorrichtung mit Verspannungen 512 am Unterboden und Rippen 612 für eine Unterbodenkühlung, gemäß einem weiteren Ausführungsbeispiel der vorliegenden Erfindung, Die Verspannungen 512 und die Rippen 612 werden jeweils durch Verschlusselemente 1603 fixiert.

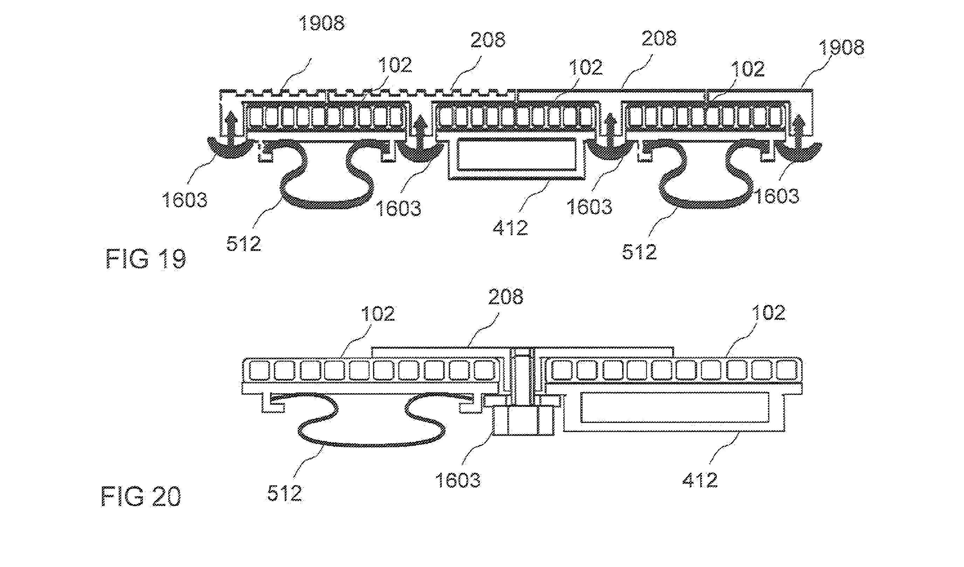

Fig. 19 zeigt eine Darstellung einer Kühlvorrichtung mit einer Heizung 412 und Verspannungen 5'12 am Unterboden, gemäß einem weiteren Ausführungsbeispiel der vorliegenden Erfindung. Die Heizung 4.1 2 und die Verspannungen 512 werden jeweils durch Verschlusselemetite 1603 fixiert. An den Randbereichen der Kühlvorrichtung sind Verbindungselemente 1908 in Form von separaten Rand-Spacern vorgesehen, Die Verbindungselemente 1908 entsprechen den Verbindungslementen 208, weisen jedoch nur auf einer Seite einen Winkelfortsatz auf, der auf dem jeweils alleinig angrenzenden Kühlkörper 102 auflegt.

Fig. 20 zeigt eine Darstellung einer Kühlvorrichtung, gemäß einem weiteren Ausführungsbeispiel der vorliegenden Erfindung, Gezeigt sind zwei benachbart angeordnete Kühlkörper 102, die über ein Verbindungselement 208 miteinander verbunden sind. Unterhalb des links gezeigten Kühlkörpers 102 ist ein Verspannelement 512 und unterhalb des rechts gezeigten Küh!körpers1 102 ist eine Heizung 412 angeordnet. Das Ve!'bmdungse!ement 208 weist eine Aussparung auf, die mittig entlang einer Längsachse eines Mittelteils des Verbindungselements 208 ausgeführt ist. In die Aussparung ist ein Verschlusselement 1603 eingeführt, Das Verschlusselement 1603 weist einen Ober die Aussparung hinausstehenden Bereich auf, der mit Endbereichen des Verspanne!ements 512 und der Heizung 412 überlappt Das Verschlusselement 1603 ist als Schraube ausgeführt. Die Aussparung kann einen runden Querschnitt aufweisen und kann als Durchgangsloch ausgeführt sein, Die Aussparung weist ein Innengewinde auf, das eine Befestigung des \/erschlusselements 1603 in dem Verbindungselement 208 ermöglicht Durch ein Festziehen der Schraube werden die Endbereiche des Verspannelements 512 und der Heizung 4°12 sowie Endbereiche der Kühlkörper 102 zwischen einem Kopf des Verschlusselements 1603 und den auf den Oberflächen der Kühlkörper 102 aufliegenden Winke!fortsätzen des Verbindungselements 208 eingespannt. Die gezeigte Verschraubung weist einen erhöhten Platzbedarf auf.

Fig, 21 zeigt eine Darstellung einer Kühlvorrichtting, gemäß einem weiteren Ausführungsbeispiel der vorliegenden Erfindung, Gezeigt sind zwei benachbart angeordnete Kühlkörper 102, die üb÷-1 ein Verbindungselement 208 miteinander verbunden sind. Unterhalb des links gezeigten Kühlkörpers 102 ist ein Verspannelement 512 und unterhalb des rechts gezeigten KÜh!körpers 102 ist eine Heizung 412 angeordnet. Das Verbindungselement 208 weist eine Aussparung auf, die mittig entlang einer Längsachse eines Mittelteils des Verbindungselements 208 ausgeführt ist. Die Aussparung kann als Nut ausgeführt sein, die parallel zu Randbereichen der Kühlkörper 102 verläuft. In die Aussparung ist ein Verschlusselement 1603 eingeführt. Das Verschlusselement 1603 weist einen über die Aussparung hinausstehenden Bereich auf, der mit Endbereichen des Verspannelements 512 und der Heizung 412 Überlappt Das Verschlusselement 1603 ist als Klammer ausgeführt. Durch ein Einpressen der Klammer werden die Endbereiche des Verspannelements 512 und der Heizung 412 sowie Endbereiche der Kühlkörper 102 zwischen einem Kopf des Verschlusselements 1603 und den auf den Oberflächen der Kühlkörper 102 aufliegenden Winkelfortsätzen des Verbindungselements 208 eingespannt. Die gezeigte Verspannung kann durch ein Sägezahnprofil gehalten werden.

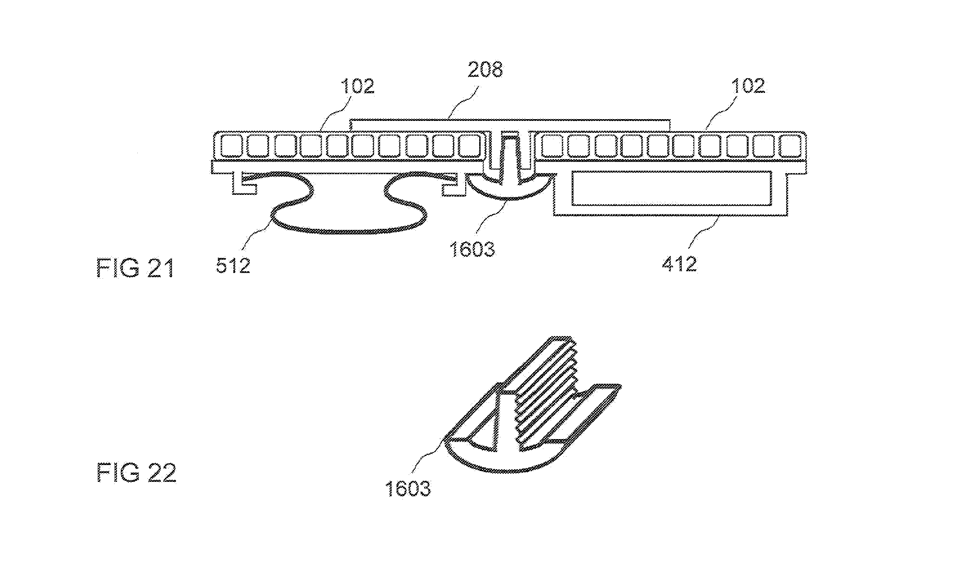

Fig. 22 zeigt eine Darstellung des in Fig. 21 gezeigten Verschlusselements 1603, gemäß einem Ausführungsbeispiel der vorliegenden Erfindung Das Verschlusselements 1603 ist als Klammer ausgeführt und weist einen länglichen Mittelteil auf, der in die Aussparung des Verbindungselements 208 eingeführt werden kann. Der Mittelteil weist beidseitig ein Sägezahnprofil auf, durch das sich der Mittelteil mit einem Innenwandbereich der Aussparung verzahnen kann, Dadurch kann sich das Verschlusselement 1603 in dem Verbindungselements 208 festklemmen. Ein bogenförmiger Bereich ist mittig an einem Ende des Mittelteils angeordnet. Auf diese Weise weist das das Verschlusselement 1603 einen ankerförmigen Querschnitt auf. Endbereich des bogenförmigen Bereichs können im montierten Zustand eine Spannkraftkraft oder Druckkraft auf die Kühlkörper 102 ausüben, um diese mit dem Verbindungselement 208 zu verspannen.

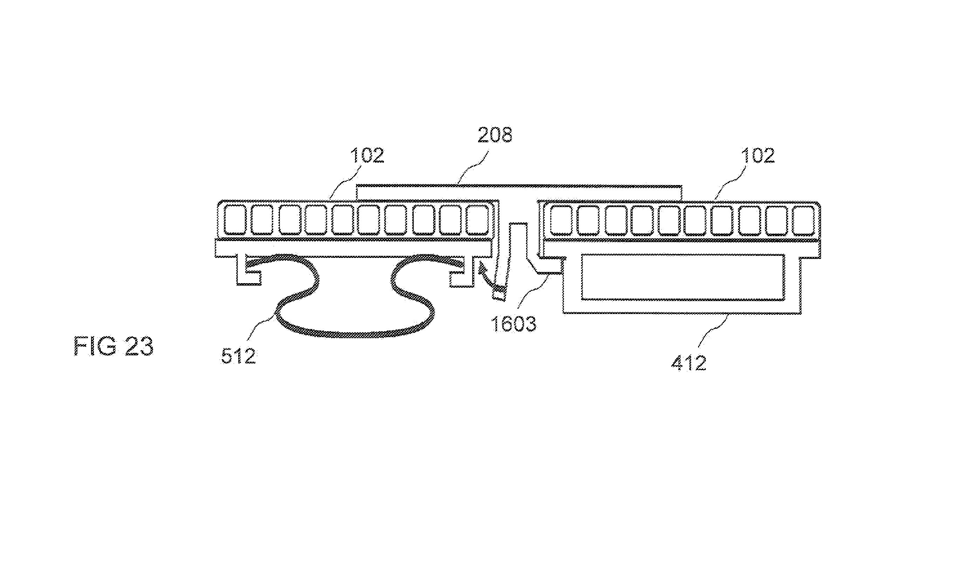

Fig. 23 zeigt eine Darstellung einer Kühlvorrichtung, gemäß einem weiteren Ausführungsbeispiel der vorliegenden Erfindung Gezeigt sind zwei benachbart angeordnete Kühlkörper 102, die über ein Verbindungselement 208 miteinander verbunden werden. Unterhalb des links gezeigten Kühlkörpers 102 ist ein Verspannelement 512 und unterhalb des rechts gezeigten Kühlkörpers 102 ist eine Heizung 412 angeordnet. Das Verbindungselement 208 weist eine Aussparung auf, die mittig entlang einer Längsachse eines Mittelteils des Verbindungselements 208 ausgeführt ist. Dadurch weist das Verbindungselement zwei Stege auf, die zunächst parallel zu Randbereichen der Kühlkörper 102 verlaufen. Die Stege können jeweils nach außen, d.h, in Richtung des jeweils angrenzenden Kühlkörpers 102 umgebogen werden und im umgebogenen Zustand mit Endbereichen des Verspannelements 512 und der Heizung 412 überlappen. Durch einen Pfeil ist ein Umbiegen des links angeordneten Steges angedeutet. Der rechts angeordnete Steg ist bereits umgebogen. Somit wird eine Verbindung der beiden benachbarten Kühlkörper 102 mittels Verstemmen über Versteifungs oder Montagerippen erreicht.

Ziel der in den Figuren 20 bis 23 gezeigten Ausführungsbeispiele ist es, dass der Spacer-Montage Bereich möglichst schmal ist, wegen des Bauraumbedarf bei Kühlwasserkühlung und möglichst flach ist, wegen Bauraumrestriktionen in z-Richtung.

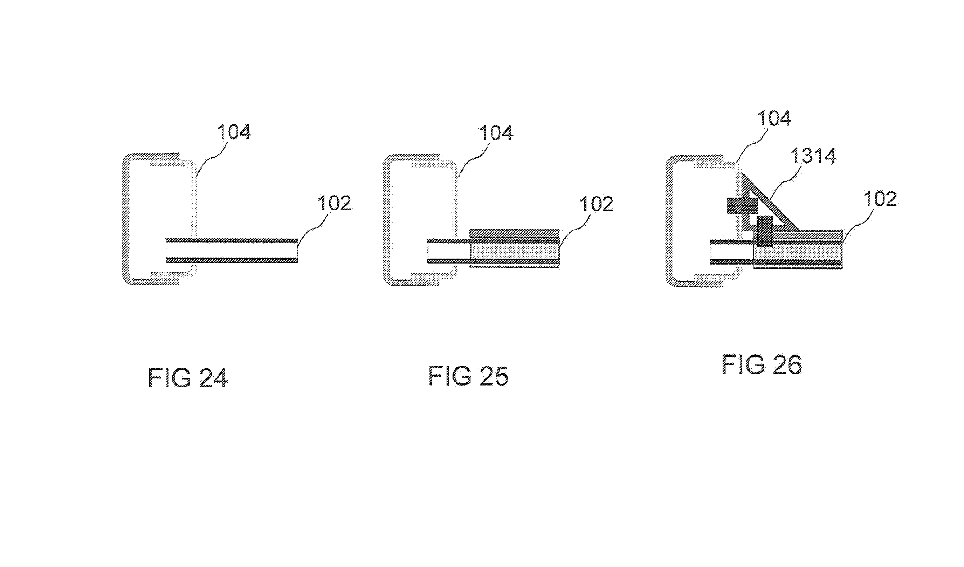

Die Figuren 24 bis 26 zeigen Querschnittdarstellungen von Kühlvorrichtungen, gemäß Ausführungsbeispiel der vorliegenden Erfindung. Dabei ist jeweils eine Blockfertigung dargestellt.

Fig. 24 zeigt einen Querschnitt durch einen Sammler 104, der eine Öffnung aufweist, in die ein Endbereich eines Kühlkörpers 102 eingefügt ist. Gemäß diesem Ausführungsbeispiel erfolgt ein Fügen von Flachrohren 102 durch Kasten-Durchzüge 104,

Fig. 25 zeigt einen Querschnitt durch einen Sammler 104, der eine Öffnung aufweist, in die ein Endbereich eines Kühlkörpers 102 eingefügt ist. Gemäß diesem Ausführungsbeispiel erfolgt ein Legen eines Verbinders zwischen Flachrohren 102.

Fig. 26 zeigt einen Querschnitt durch einen Sammler 104, der eine Öffnung aufweist, in die ein Endbereich eines Kühlkörpers 102 eingefügt ist. Gemäß diesem Ausführungsbeispiel erfolgt ein Legen eines Verbinders zwischen Flachrohren 102. Ein Verstärkungsprofil 1314 ist in einem Kontaktbereich zwischen dem Kühlkörper 102 und dem Sammler 104 angeordnet. Das Verstärkungsprofil 1314 ist als Verstärkungsdreieck mit Kammern am Kastenrand und an beiden äußeren Verbindern fixiert. Auf diese Weise sind alle Teile für die Lötung verliersicher verbunden.

Auf diese Weise kann ein Übergang zwischen Flachrohr 102 und Kasten 104 realisiert werden, der eine hohe Biegesteifigkeit aufweist.

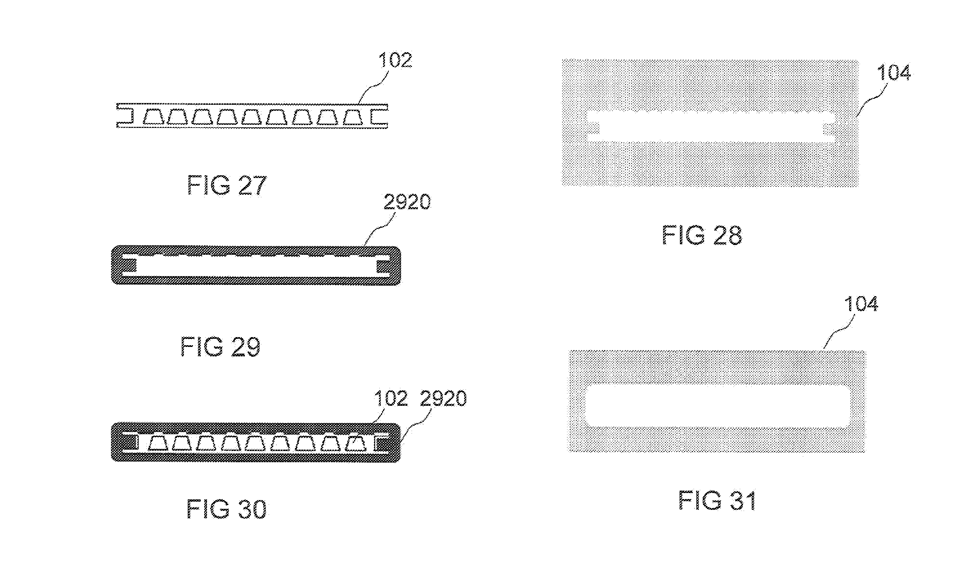

Fig. 27 zeigt eine Darstellung eines Kühlkörpers 102, gemäß einem Ausführungsbeispiel der vorliegenden Erfindung Der Kühlkörper 102 weist ein Flachrohrprofil mit einer komplexen Außenkontur auf.

Fig. 28 zeigt eine Darstellung eines Sammlers 104 mit einer Öffnung, in die ein Endbereich des in Fig. 27 gezeigten Kühlkörpers eingeführt werden kann, gemäß einem Ausführungsbeispiel der vorliegenden Erfindung. Ein Querschnitt der Öffnung ist an eine Außenstruktur des Kühlkörpers angepasst, so dass der Kühlkörper fluiddicht mit dem Sammler 104 verbunden werden kann.

Fig. 29 zeigt eine Darstellung einer Hülse 2920, gemäß einem Ausführungsbeispiel der vorliegenden Erfindung. Die Hülse 2920 ist als ein Rahmenelement ausgebildet, in das der Endbereich des in Fig. 27 gezeigte Kühlkörper eingefügt werden kann, Eine Innenstruktur der Hülse 2920 ist an eine Außenstruktur des Kühlkörpers angepasst. Somit kann der Kühlkörper fluiddicht mit der Hülse 2920 verbunden werden.

Fig. 30 zeigt eine Darstellung des in Fig. 27 gezeigten Kühlkörpers 102, dessen Endbereich von der in Fig. 29 gezeigten Hülse 2920 umschlossen ist, gemäß einem Ausführungsbeispiel der vorliegenden Erfindung. Die Hölse 2920 weist eine rechteckförmige Außenstruktur mit abgerundeten Ecken auf.

Fig. 31 zeigt eine Darstellung eines Sammlers 104 mit einer Öffnung, in die die in Fig. 30 gezeigte Anordnung aus Hülse und Kühlkörpers eingeführt werden kann, gemäß einem Ausführungsbeispiel der vorliegenden Erfindung. Ein Querschnitt der Öffnung ist an eine Außenstruktur der Hülse angepasst, so dass die Hülse fluiddicht mit dem Sammler 104 verbunden werden kann.

Mittels der separaten Hülse am Profilende ist eine einfache Gestaltung für einen Durchzug im Kasten bei Extrusions-Kühlprofilen mit komplexer Außenkontur, z.B. Feder-Nut- Verbindung oder Oberflächennuten für kA-Anpassung, realisierbar.

Die beschriebenen Ausführungsbeispiele sind nur beispielhaft gewählt und können miteinander kombiniert werden. Insbesondere ist die jeweils gezeigte Anzahl der Kühlkörper sowie anderer Elemente und der Anordnung variierbar.

## Patentansprüche

1. Kühlvorrichtung zur Kühlung elektrischer Komponenten, mit folgenden Merkmalen:
einer Mehrzahl von Kühlkörpern (102), die jeweils mindestens einen Fluidkanal (106) aufweisen und benachbart zueinander angeordnet sind, wobei zumindest zwei benachbart angeordnete Kühlkörper an gegenüberliegenden Randbereichen jeweils eine Formschlussstruktur aufweisen und über die Formschlussstrukturen mittels einer Formschlussverbindung und/oder einer Stoffschlussverbindung miteinander verbunden sind oder wobei zwischen mindestens zwei benachbart angeordneten Kühlkörpern ein Verbindungselement (208) angeordnet ist, um die benachbart angeordneten Kühlkörper mittels einer Formschlussverbindung, einer Stoffschlussverbindung und/oder einer Kraftschlussverbindung zu verbinden.

2. Kühlvorrichtung gemäß Anspruch 1, bei der die zumindest zwei benachbart angeordneten Kühlkörper (102) an gegenüberliegenden Randbereichen jeweils die Formschlussstruktur aufweisen und bei dem das Verbindungselement (208) auf einander gegenüberliegenden Seitenflächen eine erste und eine zweite Verbindungsstruktur, jeweils zum Herstellen einer Formschlussverbindung zu einer der Formschlussstrukturen, aufweist.

3. Kühlvorrichtung gemäß Anspruch 1, bei der das mindestens eine Verbindungselement (208) einen Mittelbereich aufweist, der zwischen den zwei benachbart angeordneten Kühlkörpern (102) angeordnet ist, und zwei einander gegenüberliegende und mit dem Mittelbereich verbundene Auflagebereiche aufweist, die jeweils auf einer Oberfläche eines der zwei benachbart angeordneten Kühlkörpern aufliegen.

4. Kühlvorrichtung gemäß Anspruch 3, bei dem der Mittelbereich eine Aussparung zum Aufnehmen eines Verschlusselements (1603) aufweist, wobei das Verschlusselement ausgebildet ist, um eine kraftschlüssige Verbindung zwischen dem Verbindungselement (208) und den zwei benachbart angeordneten Kühlkörpern (102) zu schaffen.

5. Kühlvorrichtung gemäß einem der vorangegangenen Ansprüche, die mindestens zwei Verbindungselemente (208) aufweist, zwischen denen einer der Mehrzahl von Kühlkörpern (102) angeordnet ist und wobei die mindestens zwei Verbindungselemente jeweils ein Aufnahmeglied zum Aufnehmen jeweils eines Endabschnitts eines Zusatzelements (412; 512; 612) der Kühlvorrichtung aufweisen, das sich zwischen den mindestens zwei Verbindungselementen parallel zu dem einen der Kühlkörper erstreckt, wenn das Zusatzelement montiert ist.

6. Kühlvorrichtung gemäß Anspruch 5, die mindestens das eine Zusatzelement (412; 512; 612) aufweist, das zwischen den mindestens zwei Verbindungselementen (208) montiert ist, wobei das mindestens eine Zusatzelement als Heizelement, als Verspannelement und/oder als Kühlelement ausgebildet ist.

7. Kühlvorrichtung gemäß einem der vorangegangenen Ansprüche, mit mindestens einem Sammler (104) der mindestens eine Öffnung aufweist, wobei der Sammler so mit zumindest zweien der Mehrzahl von Kühlkörpern (102) verbunden ist, das jeweilige Endabschnitte der Fluidkanäle der zumindest zwei Kühlkörper in der mindestens einen Öffnung münden.

8. Kühlvorrichtung gemäß Anspruch 7, mit einem Verstärkungsprofil (1314), das mit dem Sammler (104) und mindestens einem der zumindest zwei Kühlkörper (102) verbunden ist, um eine Verbindungsstelle zwischen dem Sammler und dem mindestens einem Kühlkörper zu verstärken.

9. Kühlvorrichtung gemäßAnspruch 8, bei der die Verbindungsstelle auf einer dem mindestens einem der Kühlkörper (102) zugewandten Fläche des Sammlers (104) außermittig, zu einem Randbereich des Sammlers hin verschoben angeordnet ist, und bei der das Verstärkungsprofil (1314)auf einer dem Randbereich abgewandten Seite des mindestens einem der Kühlkörper angeordnet ist.

10. Kühlvorrichtung gemäß einem der Ansprüche 7 bis 9, bei dem zumindest ein Endbereich eines der Kühlkörper (102) von einer Hülse (2920) umschlossen ist, wobei eine Innenstruktur der Hülse an eine Außenstruktur des Kühlkörpers und eine Außenstruktur der Hülse an die mindestens eine Öffnung des Sammlers (104) angepasst ist.

11. Kühlvorrichtung gemäß einem der voran gegangenen Ansprüche, **dadurch gekennzeichnet, dass** die Mehrzahl von Kühlkörpern als Extrusionsprofile, insbesondere aus Metall oder Kunststoff, ausgebildet sind.

12. Verfahren zum Herstellen einer Kühlvorrichtung zur Kühlung elektrischer komponenten, das die folgenden Schritte umfasst:
Bereitstellen einer Mehrzahl von Kühlkörpern (102), die jeweils mindestens einen Fluidkanal (106) und an gegenüberliegenden Randbereichen jeweils eine Formschlussstruktur aufweisen;
Anordnen der Mehrzahl von Kühlkörpern benachbart zueinander; und
Formschlüssiges Verbinden der Mehrzahl von Kühlkörpernjeweils über einander gegenüberliegende Formschlussstrukturen der Kühlkörper.
